# EUROPEAN PATENT SPECIFICATION

(11) **EP 0 810 310 B1**
(45) Date of publication and mention of the grant of the patent: **12.11.2003**
(21) Application number: 96941890.4
(22) Date of filing: 17.12.1996
(51) Int. Cl.: D03D 25/00, D03D 15/12, B29C 70/22, B32B 5/02, B32B 5/28

(54) **THREE-AXIS FABRIC AND METHOD FOR PRODUCING THE SAME**
DREIDIMENSIONALES STRUKTURMATERIAL SOWIE VERFAHREN ZU DESSEN HERSTELLUNG
TEXTILE A TROIS AXES ET SON PROCEDE D'ELABORATION

(30) Priority: 18.12.1995 JP 32857495
(43) Date of publication of application: 03.12.1997
(73) Proprietor: NIPPON STEEL CORPORATION, Tokyo 100-71 (JP); Sakase Adteck Co., Sakai-gum, Fukui 910-02 (JP)
(72) Inventor: KIMURA, Hiromi, c/o Nippon Steel Corporation, Futtsu City, Chiba 299-12 (JP); FURUYAMA, Masatoshi, c/o Nippon Steel Corporation, Kawasaki City, Kanagawa (JP); TADOKORO, Hiroyuki, c/o Nippon Steel Corporation, Kawasaki City, Kanagawa (JP); SHIBATA, Hirotaka, c/o Nippon Steel Corporation, Kawasaki City, Kanagawa (JP); OISHIBASHI, Hiroji, Katsuyama-shi, Fukuii 911 (JP)
(74) Representative: VOSSIUS & PARTNER
(86) International application number: JP9603675
(87) International publication number: WO97022741

(56) References cited:
- EP-A- 0 383 614
- EP-A- 0 481 762
- JP-A- 5 278 032
- JP-A- 8 209 492
- JP-U- 2 038 481
- US-A- 3 446 251
- US-A- 4 036 262
- US-A- 4 438 173
- US-A- 4 671 841

## Description

The present invention relates to a triaxial woven fabric composed of carbon fibers.

Materials used for space structures such as artificial satellites, particularly for honeycomb skin members of antennae or the solar battery panels thereof are required to have a reduced weight, high elastic modulus, low thermal expansion coefficient, high thermal conductivity or others.

To satisfy such properties, carbon fiber reinforced plastics (CFRP) have been widely used. In general, a unidirectional prepreg sheet has been often used as material for the honeycomb skin member. Since the unidirectional prepreg is anisotropic in mechanical and thermal properties, it is necessary to successively ply layers with each other to orient the fiber directions thereof, for example, at 0°, 90°, and ±45°, respectively, so that quasi-isotropic properties are obtained in the resultant product. This inevitably results in the increase in weight of the skin member, or may cause ply separation to deteriorate the properties thereof.

In a biaxial fabric prepreg, fibers are oriented in the 0° and 90° directions, and therefore, the anisotropic tendency is mitigated to some extent. However, it is also necessary to ply two or more layers to have quasi-isotropic properties, which results in the increase in weight and the ply separation. A weight increase should be avoided as far as possible in, for example, a space structure launched by a rocket.

Triaxial woven fabrics eliminate the above-mentioned drawbacks of the prior art, and exhibit the quasi-isotropy even when used alone because the fibers are oriented in the 0° and ±60° directions. Accordingly, it is possible to use the fabric in a single layer to result in weight reduction. Also, since additional layers are unnecessary, there is no risk of ply separation. For these reasons, a triaxial woven fabrics composed of carbon fibers are suitable materials for skin members. Such a triaxial woven fabric is disclosed for example in US 3 446 251 A.

Generally speaking, PAN-based high tenacity carbon fibers have been widely used as those for triaxial woven fabrics. Since the basis weight of this fabric can be as small as 75 g/m², the fabric has been favorably used for space structures. However, there is a problem in that a tensile elastic modulus of this type carbon fiber is not high; for example, 235.3596 x 10³ N/mm² (24 tf/mm²); and also the thermal conductivity, which is one of important factors in the space structures, is as low as 7 W/mK and should be improved.

Accordingly, a study has been made on the application, to triaxial woven fabrics, of Pitch-based high elastic modulus carbon fibers having a higher elastic modulus, higher thermal conductivity and lower thermal expansion coefficient compared with the PAN-based carbon fibers.

However, a triaxial woven fabric is difficult to weave compared with a conventional fabric (i.e., a biaxial fabric). As described in "Science and Industry" Vol. 66 (1992), page 273, this is because the triaxial woven fabric is produced based on a principle quite different from that of the conventional biaxial fabric, which needs a special loom therefor wherein fiber strands travel along a path having a small radius of curvature and suffer a large load.

A fabric having a small basis weight is particularly difficult to weave with Pitch-based high elastic modulus carbon fibers. The reasons therefor are as follows: (1) To reduce a fabric weight (basis weight), it is necessary to inevitably adopt a fiber strand having a small total fineness (weight per unit length), in other words, to decrease a total cross-sectional area of the fiber strand, because weaving density cannot be optionally selected in a loom for a triaxial woven fabric, which deteriorates the tensile strength of the strand. (2) Since the elongation at breaking is small in the high elastic modulus carbon fiber, fiber breakage is liable to occur when bending at a small radius of curvature.

It is said that carbon fibers capable of forming a light weight triaxial woven fabric generally have an elongation at breaking of 1% or more and a tensile elastic modulus of 392.266 x 10³ N/mm² (40 tf/mm²) or less. A trial has been done-for producing a triaxial woven fabric with carbon fibers of PAN-based having a super-high elastic modulus which are thought to be relatively easily used to weave the fabric, compared with the Pitch-based carbon fibers. In this trial, the carbon fibers having an elongation at breaking of 0.8% and a tensile elastic modulus of 441.29925 x 10³ N/mm² (45 tf/mm²) were used. The fibers were collected to form a thick strand to facilitate the weaving operation. Accordingly, the fabric weight (basis weight) becomes 90 g/m² or more, which is inferior to that of a triaxial woven fabric made of the high tenacity PAN-based carbon fibers conventionally used.

Also, even though the PAN-based carbon fiber is improved in a thermal conductivity, it is still as low as 50 W/mK or less. A Pitch-based carbon fiber generally has a higher thermal conductivity and a lower thermal expansion coefficient than that of a PAN-based carbon fiber having the same elastic modulus. Therefore, from the viewpoint of thermal properties, the Pitch-based carbon fiber is preferable to the PAN-based carbon fiber. However, in the prior art, a triaxial woven fabric could not be woven from the Pitch-based carbon fibers except that a strand having a total fineness of 90 g/km or more is used. Since the triaxial woven fabric thus woven has a basis weight of 95 g/m² or more, it could not be used as a skin member for a light weight panel. As described above, there have been no well-balanced triaxial woven fabrics in the prior art, having a high thermal conductivity and high elastic modulus as well as being light in weight.

A triaxial woven fabric composed of carbon fiber strands and a method for producing the same have been proposed in EP 740 004 A published on 30-10-1996, wherein carbon fibers prepared from an optically anisotropic pitch and having a tensile strength of 2941.995 N/mm² (300 kgf/mm²) or more, an elongation at break of 0.6% or more and a tensile elastic modulus of 147.09975 x 10³ N/mm² (15 tf/mm²) or more are used for weaving a triaxial greige-fabric which is then heated to a temperature of 1800°C or more. In this prior art publication, it is described that the higher the elastic modulus of the carbon fiber, the smaller the elongation at break thereof, which makes it practically impossible to use carbon fibers having an excessively high elastic modulus for weaving a triaxial woven fabric. In fact, in the disclosed embodiment, a strand having a tensile elastic modulus of 343.23275 x 10³ N/mm² (35 tf/mm²) or less and a total fineness of 95 g/km or more is used to result in a triaxial woven fabric having a basis weight of 98 g/m² or more. Also, in this prior art method, a greige fabric is woven with carbon fibers having an elastic modulus of 147.09975 x 10³ N/mm² (15 tf/mm²), and thereafter fired to increase the elastic modulus; in other words, the aimed fabric is obtained through two processes.

The problems above can be solved by the features specified in the claims.

According to the present invention, a triaxial woven fabric is woven with highly elastic carbon fiber strands having an elastic modulus in a range from 343.23275 x 10³ N/mm² (35 tf/mm²) to 588.399 x 10³ N/mm² (60 tf/mm²) and a total fineness in a range from 40 g/km to 75 g/km so that the fabric has a basis weight in a range from 40 g/m² to 75 g/m² through a single process, whereby a weight reduction of the fabric is realized and a technical improvement for carrying out the treatment in a single process is obtained.

The present inventors have diligently studied to solve the above problems and found that it is possible to weave a triaxial woven fabric wherein a high thermal conductivity, a high elastic modulus and a light weight are well balanced, with Pitch-based high elastic modulus carbon fibers defined by specific properties.

That is the present invention provides a triaxial woven fabric having a basis weight in a range from 40 g/m² to 75 g/m² which is composed of carbon fiber strands prepared from an optically anisotropic pitch and having a tensile elastic modulus in a range from 343.23275 x 10³ N/mm² (35 tf/mm²) to 588.399 x 10³ N/mm² (60 tf/mm²), a tensile strength of 2941.995 N/mm² (300 kgf/mm²) or more, an elongation at break of 0.6% or more, a fiber diameter of 7.0 µm or less, a thermal conductivity in the fiber-axial direction of 80 W/mK or more, preferably 90 W/mK or more, and a total fineness in a range from 40 g/km to 75 g/km.

The invention is described in detail in connection with the drawings, in which;
Fig. 1 shows a weave structure of a triaxial woven fabric; and
Fig. 2 shows a compressive stress-strain curve of carbon fiber used for the present invention.

The present invention will be described in detail below.

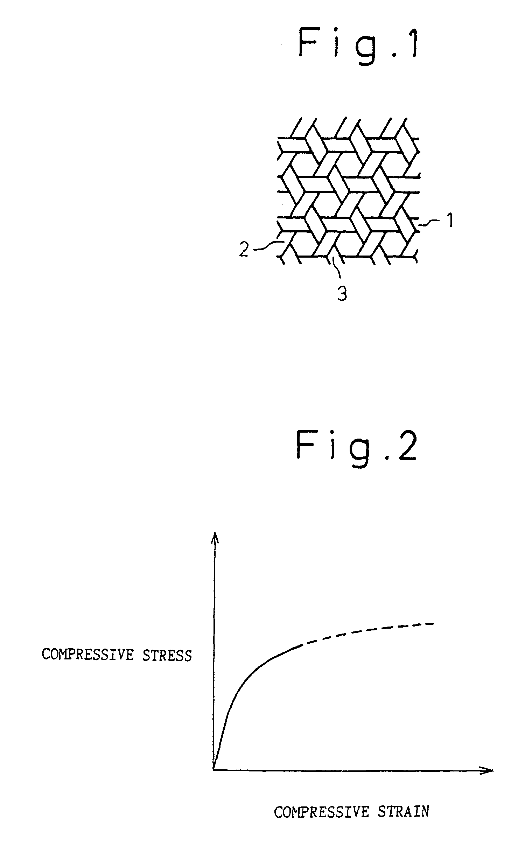

Fig. 1 shows a structure of a triaxial woven fabric. In the drawing, reference numeral 1 denotes a weft; 2 a warp I; and 3 a warp II, all of which are a fiber strand consisting of 500 to 1500 ends of Pitch-based carbon fibers, each having a fiber diameter of 7.0 µm or less. A total fineness of the strand is in a range from 40 g/km to 75 g/km. The triaxial woven fabric is of a basic weave structure having a weaving density of 3.6417 strand/cm (9.25 strand/inch), and has a basis weight in a range from 40 g/m² to 75 g/m².

The triaxial woven fabric is produced as follows. Carbon fibers are prepared from an optically anisotropic pitch, having a tensile elastic modulus of 343.23275 x 10³ N/mm² (35 tf/mm²) or more, a tensile strength of 2941.995 N/mm² (300 kg/mm²) or more, an elongation at break of 0.6% or more, a fiber diameter of 7.0 µm or less, and a thermal conductivity in the fiber-axial direction of 80 W/mK or more, preferably 90 W/mK or more. The carbon fibers are bundled to form fiber strands which then are used on a triaxial woven fabric loom for weaving a triaxial fabric of basic weave structure having a weaving density of 3.6417 strand/cm (9.25 strand/inch).

The triaxial woven fabric loom used for the present invention is of a type disclosed in "Science and Industry"; Vol. 66 (1992), page 273; or "Technical Handbook of Next Generation Composite Materials"; Japan Standard Association (1990), page 126; which has been developed based on a design of Barber Coleman Company. A weaving principle thereof is described in detail in the above documents. Upon weaving, either a beam system or a creel system may be adopted.

A possible weave structure includes a basic weave, biplane weave, basic basket weave, stuffed basic weave or others, of which the basic weave is particularly favorable in view of the weight reduction.

In such a case, according to the triaxial woven fabric loom of the above-mentioned type, the weaving density cannot be optionally selected but is limited to one of 1.8228, 36417 and 7.283 strand/cm (4.63, 9.25 and 18.5 strand/inch). When a strand of Pitch-based carbon fibers (a density thereof is approximately 2.1) having a total fineness of 75 g/km or less is used, the weaving density of 3.6417 strand/cm (9.25 strand/inch) is the most preferable in view of a balance between a strand width and an opening space. In this regard, a total cross-sectional area of the strand is calculated by total fineness/fiber density.

The production of triaxial woven fabric by means of the above-mentioned triaxial woven fabric loom is carried out by a method known in the prior art.

Since the conventional Pitch-based carbon fiber has a low tensile strength and a small elongation at break, a triaxial woven fabric having a basis weight as low as 75 g/m² or less was hardly obtainable in the prior art.

The present inventors found as a result of specific study on the above matter that the ease of weaving operation is influenced not only by a strength/elongation of carbon fiber itself but also by a load bearing ability of strand.

Even though the strength/elongation of fiber itself is low, it is possible to some extent to weave the triaxial woven fabric, provided the strand having a large cross-sectional area and thus increased in the load bearing ability is used. For example, even if the Pitch-based carbon fiber is used, having a fiber diameter of 10 µm, a tensile elastic modulus of 392.266 x 10³ N/mm² (40 tf/mm²), a tensile strength of 2941.995 N/mm² (300 kg/mm²) and an elongation at break of 0.75%, it is possible to weave a triaxial woven fabric provided the strand has a total fineness of 450 g/km or more. In such a case, however, a basis weight of the resultant fabric inevitably becomes as large as 400 g/m² or more, which is contradictory to a fact that the triaxial woven fabric is used for the purpose of weight reduction. Also, since individual fibers are liable to break, the resultant fabric becomes nappy to often deteriorate the surface quality. In addition, a crimping degree of fiber becomes large to lower the fabric strength and rigidity.

While, to reduce a weight of fabric woven at a specific weaving density (for example, 3.6417 strand/cm (9.25 strand/inch)), a strand having a small total fineness (in other words, a reduced cross-sectional area) is inevitably used. Since this results in the deterioration of load bearing ability of the strand, a carbon fiber having a high strength and a high elongation at breaking is required.

In this case, it is expected that the higher the fiber tensile strength, the larger the load bearing ability of the strand formed thereby. However, there is hardly a case wherein the load bearing ability of the strand is equal to a product of the multiplication of the individual fiber strength by the number thereof. This is because the fibers are not arranged in an equally tensioned state in the strand and are liable to break in the proportional zone prior to yielding. If such a strand is stretched, slackened fibers do not participate in the bearing of load, and only more tensely stretched residual fibers participate therein. Thus, the tensioned fibers are sequentially broken one by one as the load increases to result in the breakage of the strand at a load lower than the expected value. Therefore, it is thought that a higher elongation at break is necessary for increasing the load bearing ability of the strand.

However, the relationship between the tensile strength and the elongation at break is not so definite in the above case. In general, a Pitch-based carbon fiber strand having a total fineness of 75 g/km or less necessarily has a tensile strength of 3432.3275 N/mm² (350 kgf/mm²) or more and an elongation at break of 1% or more. This means that an elastic modulus of fiber is 343.23275 x 10³ N/mm² (35 tf/mm²) or less. Accordingly, it was said that carbon fibers having a tensile elastic modulus exceeding 343.23275 x 10³ N/mm² (35 tf/mm²) are difficult to use for weaving a triaxial woven fabric.

However, the present inventors found that it is possible to weave a triaxial woven fabric of carbon fiber strands having a total fineness of 75 g/km or less even with Pitch-based carbon fibers having a tensile elastic modulus of 343.23275 x 10³ N/mm² (35 tf/mm²) or more and 588.399 x 10³ N/mm² (60 tf/mm²) or less, provided the fibers have a fiber diameter of 7.0 µm, a tensile strength of 2941.995 N/mm² (300 kgf/mm²) or more, preferably 3432.3275 N/mm² (350 kgf/mm²) or more, an elongation at break of 0.6% or more and a thermal conductivity in the fiber-axial direction of 80 W/mK or more, preferably 90 W/mK or more.

The reason why the weaving becomes possible by the use of the above-defined carbon fibers is not clear, but one factor thereof may be that the fibers have a high compressive strain at break. That is, due to the high compressive strain at break, the fiber is difficult to break even if it bends at a small radius of curvature during the weaving operation.

When a strand having a total fineness of 75 g/km or more is used, the basis weight of the resultant triaxial woven fabric becomes 75 g/m² or more, which is larger than that of the conventional triaxial woven fabric of the PAN-based high tenacity carbon fibers widely used, and contradictory to the object of the present invention.

Contrarily, if the strand has a total fineness of 40 g/km or less, the load bearing ability of the strand becomes so small that the fiber breakage occurs during the weaving of the triaxial woven fabric. Accordingly, the total fineness should be in a range from 40 g/km to 75 g/km. If the triaxial woven fabric of a basic weave structure is woven with such strands at a weaving density of 3.6417 strand/cm (9.25 strand/inch), the basic weight thereof is in a range from 40 g/m² to 75 g/m².

When the strands of Pitch-based carbon fibers having a total finess in a range from 40 g/km to 75 g/km are used, wherein the individual fiber has a tensile strength of 2941.995 N/mm² (300 kgf/mm²) or less or an elongation at break of 0.6% or less, the strand may be broken during the weaving operation because a load bearing ability of the strand becomes too small to be durable against a weaving tension, abrasion and bending. To enable the weaving of the aimed triaxial woven fabric, it is necessary to use the carbon fibers having a tensile strength of 2941.995 N/mm² (300 kgf/mm²) and an elongation at breaking of 0.6% or more. In this regard, the tensile strength and elongation at breaking have no upper limit in the present invention, and the higher the values, the more favorable the results.

Also, it is necessary that the individual fiber has a fiber diameter of 7.0 µm or less, preferably 6.5 µm or less, and the thermal conductivity in the fiber-axial direction of 80 W/mK or more, preferably 90 W/mK or more.

When Pitch-based carbon fiber strands having a total fineness of 75 g/km or less are used, wherein the individual fiber has a fiber diameter exceeding 7.0 µm, the flexibility of the strand becomes insufficient to cause the fiber breakage in curved portions of the strand to interrupt the weaving operation, and thus such strands cannot be used for weaving the triaxial woven fabric according to the present invention. Contrarily, by using carbon fibers having a fiber diameter of 7.0 µm or less, preferably 6.5 µm or less, it is possible to weave the triaxial woven fabric with carbon fiber strands having a total fineness of 75 g/km or less, it is thought this is because a bending stress generated on the surface of the carbon fiber becomes smaller as the fiber diameter is reduced, when the fiber bends to form an arc having a constant radius of curvature, which enables the critical radius of curvature of the carbon fiber upon the breakage thereof to be smaller. In this regard, the fiber diameter can be calculated from the total fineness of strand, the number of strands and the density of carbon fiber.

The inventors also found that the triaxial woven fabric of the present invention can be woven on a triaxial woven fabric loom with strands of carbon fibers having a thermal conductivity of 80 W/mK or more, preferably 90 W/mK or more. The detailed reason therefor is not apparent, but it is surmised to be as follows. As described in Abstract of the 15th Symposium of Composite Materials (1990), page 105, carbon fiber wherein graphite crystal has been well grown exhibits a compressive stress-strain curve shown in Fig. 2. That is, the tangential elastic modulus gradually decreases as the compressive strain increases during the compression.

It is thought that such a carbon fiber potentially has a large compressive breakage strain as disclosed in JP-A-05-278032. That is, this carbon fiber exhibits a stress-strain curve shown by a solid line in Fig. 2 under a usual compression test, but can have a greater compressive strain along a dotted line in Fig. 2 by preventing the generation of shearing buckling of the fiber due to the lowering of elastic modulus.

Now, it is assumed that a single fiber is made to bend. An inner side of the curved fiber defines a compressive side, while an outer side thereof defines a stretched side. A neutral axis of the fiber which is not strained does not always coincide with a center of the fiber but deviates toward the stretch side as the compressive elastic modulus of the fiber deteriorates. A combination strain generated in the fiber is larger in compressive strain and smaller in stretch strain. It is surmised that, since the compressive breakage strain is larger than a stretch breakage strain, the fiber does not break even if it is strained at a radius of curvature smaller than that simply calculated from the elongation at break thereof.

such a non-linear effect is largely related to a size and a degree of orientation of graphite crystal in the fiber; i.e., the more the graphite crystal grows and is oriented in the fiber axial direction, the larger this effect. Also, it was found that this effect has a close relation to a thermal conductivity. That is, the larger the thermal conductivity, the more significant the non-linear effect. It is thought that a sufficient non-linear effect is obtainable if the thermal conductivity is 80 W/mK or more, preferably 90 W/mK or more.

As stated hereinabove, it is possible to produce, with Pitch-based high elastic modulus carbon fibers having specific properties, a triaxial woven fabric of a basis weight as small as 75 g/m² or less as well as having a high elastic modulus and a high thermal conductivity, while facilitating the weaving operation.

### EXAMPLES

Trials for weaving triaxial woven fabrics of a basic weave structure were carried out while using carbon fibers shown in Table 1 by means of a creel type triaxial woven fabric loom as Examples and Comparative Examples, at a weaving density of 3.6417 strand/cm (9.25 strand/inch). Basic weights of the resultant fabrics were shown in Table 1. According to Examples 1 and 2, the obtained fabrics, had a favorable surface quality with fewer naps, while according to Comparative Examples 1 and 2, the weaving operation could not be continued due to fiber breakage.

**Table 1**

| | Carbon fiber | | | | | | Fabric |
|---|---|---|---|---|---|---|---|
| | Fiber diameter | Elastic modulus | Strength | Elongation | Fineness | Thermal conductivity | Basis weight |
| | µm | x 10³ N/mm² (tf/mm²) | N/mm² (kgf/mm²) | % | g/km | W/mK | g/m² |
| Ex. 1 | 6.0 | 490.3325 (50) | 3726.527 (380) | 0.7 | 59 | 150 | 60 |
| Ex. 2 | 5.5 | 392.266 (40) | = (380) | 0.9 | 49 | 90 | 50 |
| Com. 1 | 8.0 | = (40) | 3530.394 (360) | 0.8 | 53 | 90 | not |
| Com. 2 | 6.0 | = (40) | 3236.1945 (330) | 0.8 | 59 | 70 | not woven |

As stated above, according to the present invention, it is possible to provide a skin member for a honeycomb panel having a reduced weight, high rigidity, high thermal conductivity and extremely low thermal expansion coefficient, which is usable alone without lamination because of its isotropic property and therefore is free from ply-separation and capable of simplifying the manufacturing process.

## Claims

1. A triaxial woven fabric having a basis weight in a range from 40 g/m² to 75 g/m², composed of strands of carbon fibers prepared from an optically anisotropic pitch and having a tensile elastic modulus in a range from 343.23275 x 10³ N/mm² (35 tf/mm²) to 588.399 x 10³ N/mm² (60 tf/mm²), a tensile strength of 2941.995 N/mm² (300 kgf/mm²) or more, an elongation at breaking of 0.6% or more, a fiber diameter of 7.0 µm or less, and a thermal conductivity in the fiber-axial direction of 80 W/mK or more; a total fineness of the strand being in a range from 40 g/km to 75 g/km.

2. A method for producing a triaxial woven fabric of a basis weave structure at a weaving density of 3.6417 strand/cm (9.25 strand/inch) by means of a triaxial woven fabric loom from strands of carbon fibers prepared from an optically anisotropic pitch and having a tensile elastic modulus of 343.23275 x 10³ N/mm² (35 tf/mm²) or more, a tensile strength of 2941.995 N/mm² (300 kgf/mm²) or more, an elongation at breaking of 0.6% or more, a fiber diameter of 7.0 µm or less, and a thermal conductivity in the fiber-axial direction of 80 W/mK or more; a total fineness of the strand being in a range from 40 g/km to 75 g/km.

## Patentansprüche

1. Triaxiale Webware mit einem Grundgewicht im Bereich vom 40 g/m² bis 75 g/m², die aus Strängen von Kohlenstoff-Fasern besteht, die aus optisch anisotropem Pech hergestellt werden und ein Zugelastizitätsmodul im Bereich vom 343,23275 x 10³N/mm² (35 tf/mm²) bis 588,399 x 10³ N/mm² (60 tf/mm²), eine Zugfestigkeit von 2941,995 x N/mm² (300 kgf/mm²) oder mehr, eine Bruchdehnung von 0,6% oder mehr, einen Faserdurchmesser von 7,0 µm oder weniger und eine Wärmeleitfähigkeit in der Faserachsenrichtung von 80 W/mK oder mehr aufweisen, wobei eine Gesamtfeinheit des Strangs im Bereich von 40 g/km bis 75 g/km liegt.

2. Verfahren zur Herstellung einer triaxialen Webware einer Grundwebstruktur bei einer Webdichte von 3,6417 Stränge/cm (9,25 Stränge/Inch) mittels eines Webstuhls für triaxiale Webware aus Strängen von Kohlenstoff-Fasern, die aus optisch anisotropem Pech hergestellt werden und ein Zugelastizitätsmodul von 343,23275 x 10³N/mm² (35 tf/mm²) oder mehr, eine Zugfestigkeit von 2941,995 x N/mm² (300 kgf/mm²) oder mehr, eine Bruchdehnung von 0,6% oder mehr, einen Faserdurchmesser von 7,0 µm oder weniger und eine Wärmeleitfähigkeit in der Faserachsenrichtung von 80 W/mK oder mehr aufweisen, wobei eine Gesamtfeinheit des Strangs im Bereich vom 40 g/km bis 75 g/km liegt.

## Revendications

1. Textile à trois axes ayant une masse de base comprise dans une plage allant de 40 g/m² à 75 g/m², composé de fils de fibres de carbone préparés à partir d'un brai optiquement anisotrope et ayant un module d'élasticité en traction compris dans une plage allant de 343,23275 x 10³ N/mm² (35 tf/mm²) à 588,399 x 10³ N/mm² (60 tf/mm²), une résistance à la traction supérieure ou égale à 2941,995 N/mm² (300 kgf/mm²), un allongement à la rupture supérieur ou égal à 0,6 %, un diamètre de fibre inférieur ou égal à 7,0 µm et une conductivité thermique dans la direction axiale de la fibre supérieure ou égale à 80 W/mK ; la finesse totale du fil étant comprise dans une plage allant de 40 g/km à 75 g/km.

2. Procédé pour produire un textile à trois axes ayant une structure d'armature fondamentale à une densité de tissage de 3,6417 fils/cm (9,25 fils/pouce) au moyen d'un métier pour textiles à trois axes à partir de fibres de carbone préparées à partir d'un brai optiquement anisotrope et ayant un module d'élasticité en traction supérieur ou égal à 343,23275 x 10³ N/mm² (35 tf/mm²), une résistance à la traction supérieure ou égale à 2941,995 N/mm² (300 kgf/mm²), un allongement à la rupture supérieur ou égal à 0,6 %, un diamètre de fibre inférieure ou égale à 7,0 µm et une conductivité thermique dans la direction axiale de la fibre supérieure ou égale à 80 W/mK ; une finesse totale du fil étant comprise dans une plage allant de 40 g/km à 75 g/km.
